(19) Europäisches Patentamt
European Patent Office
Office européen des brevets

(11) **EP 1 523 052 B1**

(12) **FASCICULE DE BREVET EUROPEEN**

(45) Date de publication et mention de la délivrance du brevet:
**09.05.2018 Bulletin 2018/19**

(51) Int Cl.:
*H01M 4/131* (2010.01)    *H01M 4/505* (2010.01)
*H01M 4/525* (2010.01)    *H01M 4/48* (2010.01)
*H01M 10/0525* (2010.01)    *H01M 4/587* (2010.01)
*H01M 4/1391* (2010.01)

(21) Numéro de dépôt: **04292397.9**

(22) Date de dépôt: **08.10.2004**

(54) **MATIÈRE ÉLECTROCHIMIQUEMENT ACTIVE POUR ÉLECTRODE POSITIVE DE GÉNÉRATEUR ÉLECTROCHIMIQUE RECHARGEABLE AU LITHIUM**

ELEKTROCHEMISCHES AKTIVES MATERIAL FÜR NEGATIVE ELEKTRODE IN EINEM WIEDERAUFLADBAREN ELEKTROCHEMISCHEN LITHIUM-GENERATOR

ELECTROCHEMICAL ACTIVE MATERIAL FOR POSITIVE ELECTRODE OF LITHIUM RECHARGEABLE ELECTROCHEMICAL GENERATOR

(84) Etats contractants désignés:
**DE FR GB**

(30) Priorité: **10.10.2003 FR 0311866**

(43) Date de publication de la demande:
**13.04.2005 Bulletin 2005/15**

(73) Titulaire: **SAFT**
**93170 Bagnolet (FR)**

(72) Inventeurs:
- **Jordy, Christian**
**33440 St. Louis de Montferrand (FR)**
- **Audry, Claudette**
**33520 Bruges (FR)**
- **Boeuve, Jean-Pierre**
**33450 Montussan (FR)**
- **Biensan, Philippe**
**33360 Carignan de Bordeaux (FR)**
- **Lecerf, André**
**35740 Pace (FR)**

(74) Mandataire: **Hirsch & Associés**
**137, rue de l'Université**
**75007 Paris (FR)**

(56) Documents cités:
**EP-A- 1 189 296      JP-A- 10 241 691**
**US-A1- 2002 114 995    US-A1- 2003 022 063**
**US-A1- 2003 180 620**

- **PATENT ABSTRACTS OF JAPAN vol. 2003, no. 05, 12 mai 2003 (2003-05-12) -& JP 2003 031219 A (YUASA CORP), 31 janvier 2003 (2003-01-31)**
- **PATENT ABSTRACTS OF JAPAN vol. 2003, no. 07, 3 juillet 2003 (2003-07-03) & JP 2003 068298 A (SEIMI CHEM CO LTD), 7 mars 2003 (2003-03-07)**
- **PATENT ABSTRACTS OF JAPAN vol. 2000, no. 02, 29 février 2000 (2000-02-29) & JP 11 307094 A (CHUO DENKI KOGYO CO LTD), 5 novembre 1999 (1999-11-05)**

**Description**

La présente invention se rapporte à une matière électrochimiquement active destinée à être utilisée dans l'électrode positive d'un générateur électrochimique rechargeable au lithium. Bien entendu l'invention concerne aussi l'électrode positive contenant une telle matière active et le générateur au lithium comprenant cette électrode.

Les oxydes lithiés de métaux de transition sont connus comme matière active cathodique utilisable dans les générateurs au lithium, et plus particulièrement $LiNiO_2$ qui apparaît comme très prometteur en raison de sa longue durée de vie et de sa capacité élevée pour un coût acceptable. De nombreux travaux se sont attachés à améliorer les caractéristiques de la matière active cathodique $LiNiO_2$ qui possède une forte instabilité thermique, ce qui présente un risque important pour la sécurité de l'utilisateur. Parmi les solutions envisagée pour stabiliser la structure de $LiNiO_2$ lors de l'insertion/désinsertion du lithium, la substitution d'une partie du nickel par d'autres éléments moins réactifs est celle qui a été le plus fréquemment retenue.

Par exemple, une matière active cathodique est proposée par le document EP-0 782 206 qui est basée sur la substitution de $LiNiO_2$ par Al et éventuellement Co et/ou Mn. Mais la matière active ainsi obtenue possède une capacité peu élevée qui décroît notablement avec l'augmentation du taux de Mn.

Le document EP-0 918 041 décrit une matière active d'électrode positive dont la stabilité en cyclage à température élevée est améliorée. C'est un oxyde complexe lithium/nickel/cobalt de formule :

$$Li_yNi_{1-(x1+x2)}Co_{x1}M_{x2}O_2$$

avec $x_1+x_2 = x$; $0,9 \leq y \leq 1,3$ ; $0 < x \leq 0,5$ ; $0 < x_1 < 0,5$ et $x_2$ dépendant de M, et dans laquelle M est au moins un élément choisi parmi Al, Fe, Mn et B.

Le degré d'oxydation initial global des métaux Ni, Co, et M est de (4-y). Entre l'état initial et l'état surchargé, le métal peut donc échanger y électrons. A l'état surchargé, il n'y aura alors plus de lithium, et la structure de la matière active deviendra donc très instable en cas de surcharge.

Le document US-6,040,090 décrit une matière active d'électrode positive dont les caractéristiques de charge/décharge en cyclage et la capacité initiale sont améliorées. Cette matière active a pour formule :

$$Li_aCo_bMn_c(M)_dNi_{1-(b+c+d)}O_2$$

avec $0 < a < 1,2$ ; $0,01 \leq b \leq 0,5$ ; $0,05 \leq c \leq 0,4$ ; $0,01 \leq d \leq 0,4$ et $0,15 \leq b+c \leq 0,5$ et dans laquelle M est au moins un élément choisi parmi B, Al, Si, Fe, V, Cr, Cu, Zn, Ga, et W.

Ce document décrit une matière active qui contient au moins Ni, Co et Mn et qui présente un pic de diffraction des rayons X à $18.71° \pm 0.25°$ avec une largeur de raie à mi-hauteur inférieure ou égale à $0,22°$, et un rapport d'intensité les raies [003] et [104] : $I_{[003]}/I_{[104]} \geq 0,8$. L'inconvénient de ces matériaux est qu'ils sont aptes à se charger fortement lors d'une surcharge. Par conséquent la quantité de lithium résiduelle dans ces matériaux surchargés est très faible, ce qui les rend très instables thermiquement.

Le document EP-1 189 296 décrit une matière active cathodique monophasée de formule :

$$Li[Li_xCo_y(Ni_{1-z}Mn_z)_{1-x-y}]O_2$$

avec $0 < x \leq 0,16$ , $0,1 \leq y \leq 0,3$ et $0,40 \leq z \leq 0,65$.

La plupart de ces matériaux présentent des capacités totales à l'état surchargé très élevées supérieures à 251 mAh/g. Par conséquent les quantités de lithium résiduelles à l'état surchargé sont inférieures à 0.1 Li/formule. Ces matériaux sont donc très instables à l'état surchargé.

Le document WO 02/073 718 décrit une matière active d'électrode positive dont les caractéristiques de charge/décharge en cyclage et en régime rapide sont améliorées. Cette matière active a pour formule :

$$Li_{1-z}[Mn_{0.5-x-y}Ni_{0.5-x'-y'}M_{x+x'}Li_{y+y'}]O_2$$

avec

$$0,001 < x \leq 0,10 \; ; \; 0,001 < x' \leq 0,10$$

$$0 \leq y \leq 0,10 \; ; \; 0 \leq y' \leq 0,10$$

$$x+x'+y+y' \le 0,40 \; ; \; 0 \le z \le 1$$

et dans laquelle M=B, Mg, Al, Ti, V, Cr, Fe, Co, Cu, Zn.

Les exemples décrits dans ce document présentent une capacité totale à l'état surchargé supérieure à 249mAh/g ce qui correspond à une quantité de lithium résiduelle très faible (inférieure à 0,1 Li/formule). Ces matériaux sont donc également très instables à l'état surchargé.

Une matière active d'électrode est également décrite dans le document US2003022063. Toutes les matières actives actuellement connues présentent donc une stabilité thermique encore insuffisante pour assurer la sécurité de l'utilisateur. Bien que satisfaisant à la plupart des tests effectués en conditions abusives (test de court-circuit externe, test au clou, ...), les générateurs contenant de telles matières active ne résistent pas à la surchauffe provoquée par une surcharge. En effet lors de la surcharge, il se produit une élévation de température importante et soudaine due à une réaction exothermique de la matière active d'électrode avec l'électrolyte. Etant donné que la plupart des matériaux ont une structure très instable, la surchauffe entraîne la dégradation de ces matières actives.

La présente invention a pour but de proposer un générateur électrochimique rechargeable offrant à l'utilisateur une sécurité accrue en cas de surcharge accidentelle par rapport aux générateur connus, tout en présentant les performances attendues par l'utilisateur, notamment une capacité réversible élevée et une longue durée de vie en cyclage. En particulier l'invention a pour but de proposer une matière électrochimiquement active dont la stabilité thermique, notamment en surcharge à fort régime, est améliorée de manière à minimiser la réaction entre la matière active et l'électrolyte et à limiter l'emballement thermique qui en résulte.

L'objet de la présente invention est un composé d'insertion, utilisé comme matière électrochimiquement active d'électrode, résultant de la substitution d'une partie du nickel d'un oxyde mixte de nickel et de lithium du type $LiNiO_2$. La matière active selon l'invention doit présenter en combinaison les deux caractéristiques suivantes.

D'une part cette matière active est un oxyde monophasé répondant à la formule générale du type $LiMO_2$ suivante :

$$Li(M^1_{(1-a-b-c)}Li_a M^2_b M^3_c)O_2$$

dans laquelle

$$0,02 < a \le 0,25$$

$$0 \le b < 0,30$$

$$0 \le c < 0,30$$

$$(a+b+c) < 0,50$$

$M^3$ est au moins un élément choisi parmi Al, B et Ga
$M^2$ est au moins un élément choisi parmi Mg et Zn,
et $M^1 = Ni_{(1-x-y-z)}Co_x Mn_y M^4_z$
où $M^4$ est au moins un élément choisi parmi Fe, Cu, Ti,

Zr, V, Ga et Si, et

$$0 \le x < 0,70$$

$$0,10 \le y < 0,55$$

$$0 \le z < 0,30$$

$$0{,}20 < (1{-}x{-}y{-}z)$$

$$b{+}c{+}z > 0$$

D'autre part cette matière active doit simultanément vérifier, pour un état de charge quelconque, la relation R suivante telle que 0,40 < R ≤ 0,61:

$$R = (1{-}a{-}b{-}c) * [3 - [((n_{Li} / n_{MA}) + d_{ox}) / (4{-}2b{-}3c)] * (2{-}b{-}2c)]$$

où $n_{Li}$ est la teneur en lithium exprimée en mole,
$n_{MA}$ est la somme des teneurs en Ni, Mn, Co et $M^4$, exprimée en mole, et
$d_{ox}$ est le degré d'oxydation global de $M^1$.

Les grandeurs $n_{Li}$, $n_{MA}$ et $d_{ox}$ sont mesurées sur une électrode positive lavée de la manière suivante. Après démontage du générateur électrochimique, l'électrode est lavée sous atmosphère inerte en boîte à gant dans une solution de diméthylcarbonate (DMC) en large excès pendant 12 heures afin d'éliminer le lithium provenant du sel de l'électrolyte. Le lithium encore présent après le lavage est donc celui contenu dans la matière active.

Les teneurs en Ni, Mn, Co et M sont obtenues par dosage par Plasma à Couplage Inductif (ICP) de la manière suivante. On place 100 à 200mg de poudre de matière active dans un container en téflon étanche de 10cc environ dans lequel on verse une solution d'acide chlorhydrique (HCl) à une concentration de 6 moles/l contenant 400mg d'iodure de potassium KI. Le container est ensuite fermé de manière étanche, l'ensemble de l'opération ayant lieu en atmosphère inerte (argon). Le container est ensuite placé dans une étuve à 40°C pendant 12 heures. L'ensemble des métaux à l'état oxydés ont été réduits en consommant des ions I⁻. Un dosage par une solution titrée de thiosulfate permet de mesurer la quantité d'ions I⁻ ayant réagi et de calculer le degré d'oxydation de la matière active.

Le principe de l'invention est de réduire la capacité totale chargeable permettant ainsi de conserver une quantité de lithium dans la structure suffisante pour éviter une trop grande déstabilisation thermique. La relation R correspond, pour la formule donnée, au nombre d'électrons qui peuvent être délivrés lors de la charge. Ce nombre d'électrons est conditionné par la différence de degré d'oxydation des métaux représentés par $M^1$ entre l'état final et l'état initial.

Pour une matière active connue de type $LiNiO_2$, le degré d'oxydation initial est de 3 et le degré d'oxydation à l'état surchargé (c'est-à-dire lorsque la matière active a subi une charge de capacité très supérieure à sa capacité théorique, par exemple une charge de 320mAh/g) est de 4. Entre ces deux états, un électron a été échangé ce qui correspond à un atome de lithium qui s'est désinséré de la structure. A l'état surchargé, cette matière active a donc pour composition $NiO_2$. Cet état est extrêmement instable du fait qu'il n'existe plus d'atome dans le plan interfeuillet de la structure cristallographique. Cette matière active présente donc un comportement thermique à l'état surchargé qui n'est pas satisfaisant.

De manière surprenante, l'inventeur a constaté que, lorsque la matière électrochimiquement active selon la présente invention vérifie la relation R, elle présente une stabilité à l'état surchargé bien supérieure à celle des matière active précédemment connues. La teneur en lithium reste élevée à l'état surchargé et permet d'éviter la déstabilisation thermique de la structure cristallographique. Ainsi la présente invention propose des compositions d'oxydes lamellaires telles que la matière active d'électrode positive présente une capacité surchargeable très faible.

Selon un premier mode de réalisation de l'invention a, b, c, x, y et z vérifient la condition suivante :

$$[ 3 - (3x{+}4y{+}4z) * (1{-}a{-}b{-}c) - (a{+}2b{+}3c) ] / [ (1{-}x{-}y{-}z) * (1{-}a{-}b{-}c) ] > 2$$

Cette formule correspond au degré d'oxydation du nickel qui doit être supérieur à 2 pour que le matériau monophasé existe.

Selon un deuxième mode de réalisation de l'invention, c n'est pas nul et répond à la condition : 0 < c .

Selon un troisième mode de réalisation de l'invention, $M^4$ est le titane Ti et z n'est pas nul et répond à la condition : 0 < z < 0,20 .

Selon un quatrième mode de réalisation de l'invention, $M^4$ est Si et z n'est pas nul et répond à la condition : 0 < z < 0,20 .

Selon un cinquième mode de réalisation de l'invention, $M^2$ est Mg et b n'est pas nul et répond à la condition : 0 < b < 0,20 .

La présente invention a aussi pour objet une électrode positive de générateur électrochimique rechargeable au lithium comprenant un support conducteur recouvert d'une couche active contenant la matière active précédemment décrite. La couche active peut contenir en outre un liant et/ou un matériau conducteur.

La présente invention a encore pour objet un générateur électrochimique rechargeable au lithium comprenant au moins une électrode contenant la matière active précédemment décrite.

Selon une forme d'exécution particulière de la présente invention, le générateur électrochimique comprend l'électrode positive précédemment décrite

Selon une autre forme d'exécution de la présente invention, le générateur électrochimique comprend en outre une électrode négative dont la matière active est choisie parmi du lithium métallique et un matériau susceptible d'insérer du lithium dans sa structure.

Avantageusement la matière active de l'électrode négative est un matériau carboné susceptible d'insérer du lithium dans sa structure. Le matériau carboné est choisi de préférence parmi le graphite, le coke, le noir de carbone et le carbone vitreux.

On a vu précédemment qu'une matière électrochimiquement active selon l'art antérieur ne vérifiant pas la relation R peut se délithier quasi-totalement lors de la surcharge. Or à l'état délithié, la matière active devient très instable thermiquement, ce qui se traduit par une température de démarrage de l'emballement thermique plus faible, ainsi qu'une réaction exothermique d'énergie plus élevée. Il s'ensuit que le générateur contenant une telle matière active présente des caractéristiques en surcharge non satisfaisantes.

En effet le test de surcharge diffère des autres tests à plusieurs titres :

- au fur et à mesure de la surcharge, la quantité de lithium dans la matière active diminue fortement, ce qui a pour effet d'augmenter son instabilité thermique,
- tant que l'électrode positive peut se charger, l'électrode négative continue également de se charger jusqu'à déposer du lithium métallique ; le lithium ainsi déposé est extrêmement réactif.

Au contraire la matière électrochimiquement active selon la présente invention qui vérifient la relation R présente une capacité de délithiation en surcharge bien plus faible, ce qui permet de minimiser la déstabilisation de la matière active ainsi que de minimiser la formation de lithium. Le comportement thermique des générateurs utilisant une telle matière active se trouve donc amélioré en particulier lors de tests de surcharge à fort régime (supérieur à Ic qui est le courant nécessaire théorique pour décharger le générateur en une heure).

D'autres caractéristiques et avantages de la présente invention apparaîtront au cours des exemples suivants de réalisation, donnés bien entendu à titre illustratif et non limitatif, et dans le dessin annexé sur lequel

- la figure 1 montre un exemple de spectre de diffraction des rayons X obtenu sur une matière électrochimiquement active selon la présente invention ;
- la figure 2 représente la dérivée par rapport au temps de la tension dU/dt (en volt par heure) en fonction de la capacité chargée C2 au cours de la deuxième phase de charge (en mAh par gramme de matière active) pour un générateur électrochimique rechargeable au lithium selon l'invention,
- la figure 3 montre une courbe obtenu par Calorimétrie Différentielle à Balayage dite méthode « D.S.C. » (acronyme de Differential Scanning Calorimetry) appliquée à une électrode comprenant une matière électrochimiquement active selon l'invention,
- la figure 4, analogue à la figure 3, montre une courbe obtenue par la méthode D.S.C. pour une électrode comprenant une matière active ne faisant pas partie de la présente invention.

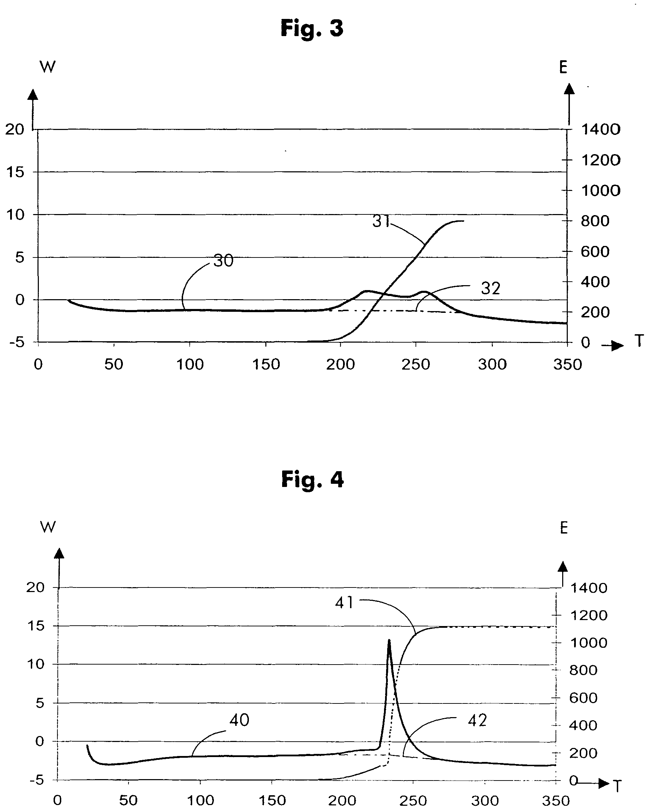

Sur les figures 3 et 4, la puissance thermique W en W/g de matière active est donnée en ordonnée gauche, l'énergie thermique cumulée E en J/g de matière active en ordonnées droite, et en abscisse la température T en °C.

Synthèse de la matière électrochimiquement active :

Les matériaux ont été synthétisés à partir d'un mélange des sels de métaux dans les proportions stoechiométriques auxquels a été rajouté un promoteur carbonaté, comme par exemple de l'hydrogénocarbonate. Après réaction, le précipité obtenu est filtré et séché. On utilise ensuite du carbonate de lithium comme agent de lithiation que l'on mélange énergiquement par voie mécanique au promoteur carbonaté dans les proportions stoechiométriques. Un traitement thermique est ensuite réalisé dans un four sous circulation d'oxygène à 900°C pendant 24 heures.

EXEMPLES 1 A 12

Les éléments rentrant dans la composition du terme M des matières actives de la forme $LiMO_2$ utilisées pour les exemples 1 à 12, c'est à dire dans l'expression $(M^1_{(1-a-b-c)}Li_aM^2_bM^3_c)$, sont indiqués dans le tableau 1, exprimés en

## EP 1 523 052 B1

fractions atomiques.

Tableau 1

| Exemples | Ni | Mn | Co | Li | $M^2$=Mg | $M^3$=Al | $M^3$=B | $M^4$=Ti | $M^4$=Si |
|---|---|---|---|---|---|---|---|---|---|
| 1 * | 0,50 | 0,28 | 0,14 | 0,07 | 0 | 0 | 0,01 | 0 | 0 |
| 2 * | 0,39 | 0,39 | 0,14 | 0,07 | 0 | 0,01 | 0 | 0 | 0 |
| 3 * | 0,39 | 0,38 | 0,13 | 0,09 | 0 | 0,01 | 0 | 0 | 0 |
| 4 | 0,36 | 0,37 | 0,13 | 0,13 | 0 | 0 | 0,01 | 0 | 0 |
| 5 | 0,35 | 0,35 | 0,12 | 0,17 | 0 | 0 | 0,01 | 0 | 0 |
| 6 | 0,38 | 0,35 | 0,12 | 0,13 | 0 | 0,02 | 0 | 0 | 0 |
| 7 | 0,36 | 0,33 | 0,13 | 0,13 | 0 | 0,05 | 0 | 0 | 0 |
| 8 | 0,39 | 0,34 | 0,12 | 0,13 | 0 | 0 | 0,02 | 0 | 0 |
| 9 | 0,36 | 0,33 | 0,13 | 0,13 | 0 | 0 | 0,05 | 0 | 0 |
| 10 | 0,37 | 0,32 | 0,13 | 0,13 | 0,05 | 0 | 0 | 0 | 0 |
| 11 * | 0,42 | 0,23 | 0,12 | 0,07 | 0 | 0 | 0 | 0,16 | 0 |
| 12 | 0,37 | 0,33 | 0,12 | 0,13 | 0 | 0 | 0 | 0 | 0,05 |
| * Les exemples 1-3 et 11 ne faisant pas partie de l'invention. | | | | | | | | | |

Le tableau 2 donne, pour chacune des compositions du tableau 1, les valeurs de a, b, c, x, y, z, $n_{Li}$, $n_{MA}$ et $d_{ox}$, celle de la relation R, et la quantité de lithium résiduelle à l'état surchargé.

Tableau 2

| Ex. | a | b | c | x | y | z | b+c+z | dox$^{M1}$ | R | Li résiduel |
|---|---|---|---|---|---|---|---|---|---|---|
| 1 | 0,07 | 0 | 0,01 | 0,15 | 0,30 | 0,00 | 0,01 | 3,15 | 0,78 | 0,29 |
| 2 | 0,07 | 0 | 0,01 | 0,15 | 0,42 | 0,00 | 0,01 | 3,15 | 0,78 | 0,29 |
| 3 | 0,09 | 0 | 0,01 | 0,14 | 0,42 | 0,00 | 0,01 | 3,20 | 0,72 | 0,37 |
| 4 | 0,13 | 0 | 0,01 | 0,15 | 0,43 | 0,00 | 0,01 | 3,30 | 0,60 | 0,53 |
| 5 | 0,17 | 0 | 0,01 | 0,15 | 0,43 | 0,00 | 0,01 | 3,41 | 0,48 | 0,69 |
| 6 | 0,13 | 0 | 0,02 | 0,14 | 0,41 | 0,00 | 0,02 | 3,31 | 0,59 | 0,54 |
| 7 | 0,13 | 0 | 0,05 | 0,16 | 0,40 | 0,00 | 0,05 | 3,32 | 0,56 | 0,57 |
| 8 | 0,13 | 0 | 0,02 | 0,14 | 0,40 | 0,00 | 0,02 | 3,31 | 0,59 | 0,54 |
| 9 | 0,13 | 0 | 0,05 | 0,16 | 0,40 | 0,00 | 0,05 | 3,32 | 0,56 | 0,57 |
| 10 | 0,13 | 0,05 | 0 | 0,16 | 0,39 | 0,00 | 0,05 | 3,38 | 0,51 | 0,62 |
| 11 | 0,07 | 0 | 0 | 0,13 | 0,25 | 0,16 | 0,16 | 3,15 | 0,79 | 0,28 |
| 12 | 0,13 | 0 | 0 | 0,14 | 0,38 | 0,05 | 0,05 | 3,30 | 0,61 | 0,52 |

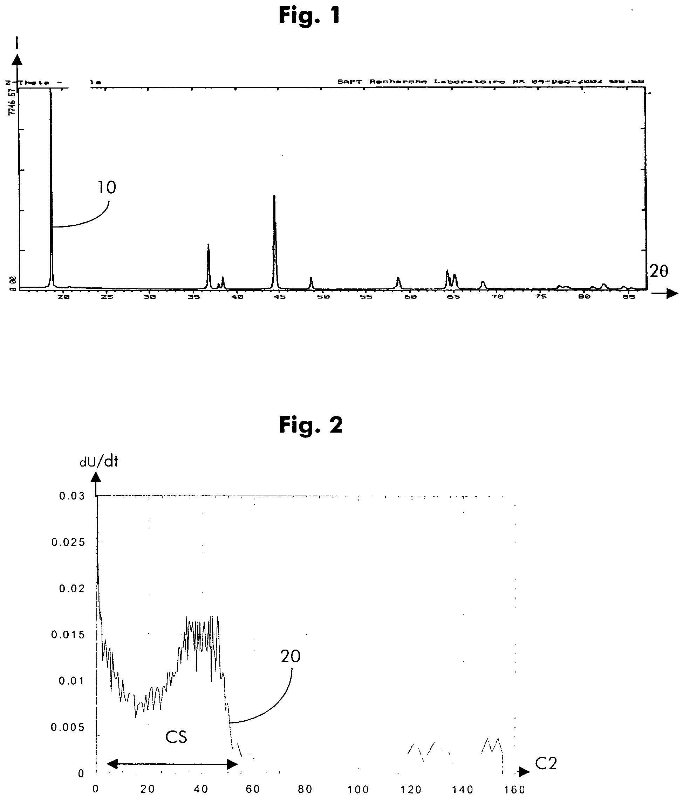

Les matières actives des tableaux 1 et 2 ont été analysées par diffraction des rayons X en utilisant la raie Ka du cuivre. Le tableau 3 en donne les valeurs des largeurs de raie à mi-hauteur et le rapport d'intensité les raies [003] et [104]. Les matières actives des exemples 1 à 12 sont quasiment monophasées. Un exemple de spectre obtenu est montré par la figure 1, sur laquelle la courbe 10 représente le spectre de diffraction X de la matière active de l'exemple 8.

Tableau 3

| Exemples | Largeur à mi hauteur de la raie à 2θ = 18.71 ± 0.25° | Rapport des intensités I[003] / I[104] |
|---|---|---|
| 1 | 0.11 | 1.01 |

(suite)

| Exemples | Largeur à mi hauteur de la raie à 2θ = 18.71 ± 0.25° | Rapport des intensités I[003] / I[104] |
|---|---|---|
| 2 | 0.12 | 1.04 |
| 3 | 0.10 | 1.13 |
| 4 | 0.09 | 1.02 |
| 5 | 0.10 | 1.08 |
| 6 | 0.09 | 1.00 |
| 7 | 0.09 | 1.05 |
| 8 | 0.10 | 1.00 |
| 9 | 0.10 | 0.98 |
| 10 | 0.12 | 1.02 |
| 11 | 0.12 | 1.06 |
| 12 | 0.10 | 1.03 |

EXEMPLES COMPARATIFS 1 A 17

Les éléments rentrant dans la composition du terme M des matières actives de la forme $LiMO_2$ utilisées pour les exemples comparatifs 1 à 17 , c'est à dire dans l'expression $(M^1_{(1-a-b-c)}Li_aM^2_bM^3_c)$, sont indiqués dans le tableau 4, exprimés en fractions atomiques.

Tableau 4

| Exemples | Ni | Mn | Co | Li | $M^2$=Mg | $M^2$=Zn | $M^3$=Al | $M^3$=B | $M^4$=Ti | $M^4$=Fe |
|---|---|---|---|---|---|---|---|---|---|---|
| C1 | 0,54 | 0,30 | 0,15 | 0,00 | 0,00 | 0,00 | 0,01 | 0,00 | 0,00 | 0,00 |
| C2 | 0,48 | 0,40 | 0,10 | 0,0 2 | 0,00 | 0,00 | 0,00 | 0,00 | 0,00 | 0,00 |
| C3 | 0,40 | 0,28 | 0,30 | 0,02 | 0,00 | 0,00 | 0,00 | 0,00 | 0,00 | 0,00 |
| C4 | 0,50 | 0,50 | 0,00 | 0,00 | 0,00 | 0,00 | 0,00 | 0,00 | 0,00 | 0,00 |
| C5 | 0,475 | 0,475 | 0,00 | 0,00 | 0,00 | 0,00 | 0,00 | 0,05 | 0,00 | 0,00 |
| C6 | 0,475 | 0,475 | 0,00 | 0,00 | 0,00 | 0,00 | 0,05 | 0,00 | 0,00 | 0,00 |
| C7 | 0,475 | 0,475 | 0,00 | 0,00 | 0,05 | 0,00 | 0,00 | 0,00 | 0,00 | 0,00 |
| C8 | 0,475 | 0,475 | 0,05 | 0,00 | 0,00 | 0,00 | 0,00 | 0,00 | 0,00 | 0,00 |
| C9 | 0,475 | 0,475 | 0,00 | 0,00 | 0,00 | 0,00 | 0,00 | 0,00 | 0,05 | 0,00 |
| C10 | 0,475 | 0,475 | 0,00 | 0,00 | 0,00 | 0,00 | 0,00 | 0,00 | 0,00 | 0,05 |
| C11 | 0,475 | 0,475 | 0,00 | 0,00 | 0,00 | 0,05 | 0,00 | 0,00 | 0,00 | 0,00 |
| C12 | 0,425 | 0,425 | 0,10 | 0,00 | 0,00 | 0,05 | 0,00 | 0,00 | 0,00 | 0,00 |
| C13 | 0,33 | 0,34 | 0,12 | 0,20 | 0,00 | 0,00 | 0,00 | 0,00 | 0,00 | 0,00 |
| C14 | 0,28 | 0,28 | 0,12 | 0,02 | 0,30 | 0,00 | 0,00 | 0,00 | 0,00 | 0,00 |
| C15 | 0,34 | 0,34 | 0,18 | 0,13 | 0,00 | 0,00 | 0,00 | 0,00 | 0,00 | 0,00 |
| C16 | 0,84 | 0,05 | 0,10 | 0,00 | 0,00 | 0,00 | 0,01 | 0,00 | 0,00 | 0,00 |
| C17 | 0,50 | 0,39 | 0,10 | 0,00 | 0,00 | 0,00 | 0,01 | 0,00 | 0,00 | 0,00 |

Le tableau 5 donne pour chacune des compositions du tableau 4 les valeurs de a, b, c, x, y, z, $n_{Li}$, $n_{MA}$ et $d_{ox}$, celle de la relation R, et la quantité de lithium résiduelle à l'état surchargé.

7

Tableau 5

| Ex. | a | b | c | x | y | z | b+c+z | $d_{ox}$ de $M^1$ | R | Li résiduel |
|---|---|---|---|---|---|---|---|---|---|---|
| C1 | 0,00 | 0,00 | 0,01 | 0,15 | 0,30 | 0,00 | 0,01 | 3,00 | 1,00 | 0,00 |
| C2 | 0,02 | 0,00 | 0,00 | 0,10 | 0,41 | 0,00 | 0,00 | 3,04 | 0,95 | 0,08 |
| C3 | 0,02 | 0,00 | 0,00 | 0,31 | 0,29 | 0,00 | 0,00 | 3,05 | 0,95 | 0,10 |
| C4 | 0,00 | 0,00 | 0,00 | 0,00 | 0,50 | 0,00 | 0,00 | 3,00 | 1,00 | 0,00 |
| C5 | 0,00 | 0,00 | 0,05 | 0,00 | 0,50 | 0,00 | 0,05 | 3,00 | 0,95 | 0,05 |
| C6 | 0,00 | 0,00 | 0,05 | 0,00 | 0,50 | 0,00 | 0,05 | 3,00 | 0,95 | 0,05 |
| C7 | 0,00 | 0,05 | 0,00 | 0,00 | 0,50 | 0,00 | 0,05 | 3,05 | 0,90 | 0,10 |
| C8 | 0,00 | 0,00 | 0,00 | 0,05 | 0,48 | 0,00 | 0,00 | 3,00 | 1,00 | 0,00 |
| C9 | 0,00 | 0,00 | 0,00 | 0,00 | 0,48 | 0,05 | 0,05 | 3,00 | 1,00 | 0,00 |
| C10 | 0,00 | 0,00 | 0,00 | 0,00 | 0,48 | 0,05 | 0,05 | 3,00 | 1,00 | 0,00 |
| C11 | 0,00 | 0,05 | 0,00 | 0,00 | 0,50 | 0,00 | 0,05 | 3,05 | 0,95 | 0,10 |
| C12 | 0,00 | 0,05 | 0,00 | 0,11 | 0,45 | 0,00 | 0,05 | 3,05 | 0,95 | 0,10 |
| C13 | 0,20 | 0,00 | 0,00 | 0,15 | 0,43 | 0,00 | 0,00 | 3,50 | 0,40 | 0,80 |
| C14 | 0,02 | 0,30 | 0,00 | 0,18 | 0,41 | 0,00 | 0,30 | 3,50 | 0,34 | 0,68 |
| C15 | 0,13 | 0,00 | 0,00 | 0,21 | 0,39 | 0,00 | 0,00 | 3,30 | 0,61 | 0,52 |
| C16 | 0,00 | 0,00 | 0,01 | 0,10 | 0,05 | 0,00 | 0,01 | 3,00 | 0,99 | 0,01 |
| C17 | 0,00 | 0,00 | 0,01 | 0,10 | 0,39 | 0,00 | 0,01 | 3,00 | 0,99 | 0,01 |

Les matières actives des tableaux 4 et 5 ont été analysées par diffraction des rayons X en utilisant la raie K$\alpha$ du cuivre. Le tableau 6 en donne les valeurs des largeurs de raie à mi-hauteur et le rapport d'intensité les raies [003] et [104]. La plupart des matières actives des exemples comparatifs 1 à 17 sont quasiment monophasées, à l'exception des exemples comparatifs 13 et 14.

Tableau 6

| Exemples | Largeur à mi hauteur de la raie à $2\theta = 18.71 \pm 0.25°$ | Rapport des intensités des raies (003)/(104) |
|---|---|---|
| C1 | 0.11 | 0.97 |
| C2 | 0.10 | 0.99 |
| C3 | 0.12 | 1.00 |
| C4 | 0.14 | 0.92 |
| C5 | 0.12 | 0.97 |
| C6 | 0.13 | 0.96 |
| C7 | 0.11 | 1.02 |
| C8 | 0.10 | 0.96 |
| C9 | 0.13 | 0.95 |
| C10 | 0.12 | 0.96 |
| C11 | 0.11 | 0.98 |
| C12 | 0.11 | 0.99 |
| C13 | 0.10 | 1.05 |
| C14 | 0.12 | 1.03 |

(suite)

| Exemples | Largeur à mi hauteur de la raie à 2θ = 18.71 ± 0.25° | Rapport des intensités des raies (003)/(104) |
|----------|------------------------------------------------------|----------------------------------------------|
| C15 | 0.15 | 0.95 |
| C16 | 0.11 | 1.02 |
| C17 | 0.12 | 0.95 |

Réalisation d'un générateur :

On réalise une électrode positive de générateur rechargeable au lithium de la manière suivante. Une pâte est préparée en mélangeant 86% en poids de matière électrochimiquement active, 6% en poids de polyfluorure de vinylidène (PVDF), et 8% en poids d'un matériau conducteur carboné, de préférence un mélange composé de 4% de suie et 4% de graphite, dans de la N-méthylpyrolidone (NMP). La pâte ainsi obtenue est déposée sur un feuillard d'aluminium qui sert de support conducteur à l'électrode. L'électrode est alors séchée à 140°C pendant 1h, puis calandrée.

L'électrode positive précédemment préparée est utilisée pour réaliser un générateur électrochimique rechargeable de format bouton. L'électrode négative est constituée d'une feuille de lithium métallique. Le séparateur utilisé est une membrane de polyéthylène (PE) commercialisée par la société "CELGARD". L'accumulateur est imprégné d'un électrolyte qui est un mélange de carbonate de propylène, de carbonate d'éthylène et de carbonate de diméthyle PC/EC/DMC dans les proportions volumiques 1/1/3, et contenant de l'hexafluorophosphate de lithium $LiPF_6$ à la concentration 1M. L'assemblage du générateur et son remplissage en électrolyte sont effectués en boîte à gants sous atmosphère d'argon exempte d'humidité.

Evaluation électrochimique :

On évalue électrochimiquement des générateurs réalisés précédemment contenant les matières actives des exemples 1 à 12 d'une part, et celles des exemples comparatifs 1 à 17 d'autre part. La première charge est réalisée à Ic/20 (où Ic est le courant théorique nécessaire pour décharger de la capacité nominale Cn du générateur en une heure) jusqu'à 4,3V , suivie d'une décharge à Ic/20 jusqu'à 3V. La seconde charge a lieu en deux phases. La première phase consiste en une charge à Ic/20 jusqu'à 4,3V. La seconde phase consiste en une charge à Ic/5 pendant 5 heures.

Pour estimer la capacité surchargée par le matériau, on trace la dérivée de la tension du générateur par rapport au temps dU/dt en fonction de la capacité chargée C2 au cours de la seconde phase. Sur la figure 2 est donné un exemple une courbe 20 obtenue où la capacité surchargée Cs est indiquée.

Lors de la seconde phase, lorsque le matériau n'accepte plus la charge, la tension se stabilise à une certaine valeur correspondant à l'oxydation de l'électrolyte. La courbe 20 présente donc un plateau correspondant à la décomposition de l'électrolyte. Lorsque la tension se stabilise, la dérivée devient donc proche de 0. La capacité surchargée Cs correspond à la capacité chargée depuis le début de la seconde phase jusqu'au début du palier.

La capacité totale chargeable par la matière active est estimée en ajoutant la capacité chargée lors de la première phase C1 à la capacité surchargée Cs ainsi déterminée.

Les tableaux 7 et 8 ci-dessous donnent, respectivement pour les exemples 1 à 12 et pour les exemples comparatifs 1 à 17, la capacité C1 chargée lors de la première phase ; la capacité surchargée Cs, ainsi que la capacité totale Ct (somme des capacités C1 et Cs), exprimées en mAh/g de matière active.

Tableau 7

| Exemples | R | C1 | Cs | Ct |
|----------|------|-----|----|-----|
| 1 | 0,78 | 185 | 41 | 226 |
| 2 | 0,78 | 171 | 56 | 227 |
| 3 | 0,72 | 167 | 44 | 211 |
| 4 | 0,60 | 146 | 34 | 180 |
| 5 | 0,48 | 134 | 16 | 150 |
| 6 | 0,59 | 148 | 30 | 178 |
| 7 | 0,56 | 135 | 35 | 170 |
| 8 | 0,59 | 142 | 36 | 178 |

(suite)

| Exemples | R | C1 | Cs | Ct |
|---|---|---|---|---|
| 9 | 0,56 | 158 | 14 | 172 |
| 10 | 0,51 | 148 | 7 | 155 |
| 11 | 0,79 | 165 | 55 | 220 |
| 12 | 0,61 | 145 | 33 | 178 |

Tableau 8

| Exemples | R | C1 | Cs | Ct |
|---|---|---|---|---|
| C1 | 1,00 | 185 | 82 | 267 |
| C2 | 0,94 | 190 | 65 | 255 |
| C3 | 0,93 | 187 | 64 | 251 |
| C4 | 1,00 | 170 | 85 | 255 |
| C5 | 1,00 | 172 | 83 | 255 |
| C6 | 1,00 | 173 | 85 | 258 |
| C7 | 0,90 | 167 | 82 | 249 |
| C8 | 1,00 | 165 | 85 | 250 |
| C9 | 1,00 | 172 | 87 | 259 |
| C10 | 1,00 | 171 | 89 | 260 |
| C11 | 0,90 | 166 | 87 | 253 |
| C12 | 0,90 | 165 | 92 | 257 |
| C13 | 0,40 | 110 | 7 | 117 |
| C14 | 0,34 | 85 | 10 | 95 |
| C15 | 0,61 | 115 | 45 | 160 |
| C16 | 0,99 | 215 | 50 | 265 |
| C17 | 0,99 | 185 | 65 | 250 |

On remarque que pour la plupart des exemples comparatifs (C1 à C12, C16, et C17) dont la valeur de R est supérieure à 0,90, la capacité totale chargée Ct est bien plus élevée ($\geq$ 249mAh/g) que pour les exemples 4 à 10 et 12 de matière active selon l'invention ($\leq$ 180 mAh/g).

D'autre part pour les exemples comparatif C13 à C15 dont la valeur de R est inférieure à 0,40, la capacité C1 chargée au cours de la première charge est inférieure ou égale à 115mAh/g. Alors que pour les exemples 4 à 10 et 12 de matière active selon l'invention, la capacité C1 est supérieure ou égale à 134mAh/g.

Ainsi les générateurs électrochimiques contenant des matières actives selon la présente invention présentent simultanément d'une part une capacité chargée C1 au cours de la première phase qui est élevée, et d'autre part une capacité surchargeable Cs ainsi qu'une capacité totale à l'état surchargé Ct beaucoup plus faibles que les matières actives ne faisant pas partie de l'invention. Par conséquent les matières actives selon la présente invention confèrent au générateur des caractéristiques en surcharge améliorées par rapport aux matières actives connues.

Evaluation thermique :

Après deux cycles de charge / décharge à température ambiante, la stabilité thermique des matières actives précédemment préparées est évaluée par Calorimétrie Différentielle à Balayage dite méthode « D.S.C. » (acronyme de Differential Scanning Calorimetry) qui est une technique déterminant la variation du flux thermique dans un échantillon soumis à une programmation en température. Lorsqu'un matériau est chauffé ou refroidi, sa structure évolue et les transformations se réalisent avec échange de chaleur. Dans le cas présent, on observe une réaction exothermique entre l'oxygène dégagé par le matériau positif et l'électrolyte. L'analyse "D.S.C." renseigne sur la température de transformation (pic endothermique ou exothermique) et sur l'énergie thermique requise pour la transformation (surface du pic).

On utilise une électrode imprégnée d'un électrolyte de composition volumique PC/EC/DMC 1/1/3, 1M LiPF$_6$. En boîte à gants, sous atmosphère inerte (argon), on prélève 3mg de matière active à l'état chargé sur l'électrode positive imprégnée d'électrolyte. On dispose l'échantillon de matière active dans un creuset qui est ensuite serti sous argon. L'échantillon de matière active est chauffé de 20°C à 500°C à une vitesse de 10°C/mn sous argon. L'analyse D.S.C. renseigne sur la stabilité thermique à l'état chargé de la matière active, donc sur le comportement de l'électrode vis à vis de l'électrolyte.

Dans l'analyse D.S.C. , les paramètres suivants sont caractéristiques de la stabilité thermique du matériau :

- W est la puissance thermique dégagée en W/g de matière active ; lorsque l'amplitude des variations de W est supérieure à 5W/g, les réactions qui se produisent deviennent violentes ;
- Tp est la température en °C à laquelle se produit la réaction violente entre la matière active surchargée et l'électrolyte ;
- E est l'énergie thermique en J/g de matière active cumulée en fonction de la température.

La figure 3 représente, en fonction de la température T, une courbe 30 de puissance thermique W, une courbe 31 d'énergie thermique totale E, et une courbe 32 représentant la ligne de base utilisée pour le calcul de l'énergie E qui sont issues du test D.S.C. d'une électrode comprenant comme matière active le composé d'insertion Li[Ni$_{0,38}$Co$_{0,12}$Mn$_{0,35}$Li$_{0,13}$Al$_{0,02}$]O$_2$ de l'exemple 6 selon l'invention.

La figure 4 représente, en fonction de la température T, une courbe 40 de puissance thermique W, une courbe 41 d'énergie thermique totale E, et une courbe 32 représentant la ligne de base utilisée pour le calcul de l'énergie E qui sont issues du test D.S.C. d'une électrode comprenant comme matière active le composé d'insertion Li[(Ni$_{0,54}$Co$_{0,15}$Mn$_{0,30}$Al$_{0,01}$]O$_2$ de l'exemple comparatif C1.

Les résultats du test D.S.C. montrent que la matière active de l'exemple 6 présente une stabilité thermique supérieure à la matière active de l'exemple comparatif C1 qui ne fait pas partie de l'invention. En effet la matière active comparative C1 présente une amplitude de puissance thermique de l'ordre de 15W/g avec une énergie thermique cumulée de 1200J/g alors que la matière active de l'exemple 6 présente une puissance thermique inférieure à 5W/g et une énergie thermique cumulée inférieure à 800J/g. La matière active selon la présente invention de l'exemple 6 présente donc des caractéristiques de stabilité thermique très améliorées par rapport à la matière activé de l'exemple comparatif C1.

On pourra sans sortir du cadre de l'invention envisager l'utilisation d'un support conducteur d'électrode de nature et de structure différente. Enfin, les différents ingrédients entrant dans la réalisation de la pâte, ainsi que leurs proportions relatives, pourront être changés. Notamment des additifs destinés à faciliter la mise en forme de l'électrode, comme un épaississant ou un stabilisateur de texture, pourront y être incorporés dans des proportions mineures.

**Revendications**

1. Matière électrochimiquement active résultant de la substitution d'une partie du nickel d'un oxyde mixte monophasé de nickel et de lithium du type LiNiO$_2$, **caractérisée en ce que** ladite matière active répond à la formule :

$$Li(M^1_{(1-a-b-c)}Li_aM^2_bM^3_c)O_2$$

dans laquelle

$$0,02 < a \leq 0,25$$

$$0 \leq b < 0,30$$

$$0 \leq c < 0,30$$

$$(a+b+c) < 0,50$$

M$^3$ est au moins un élément choisi parmi Al, B et Ga
M$^2$ est au moins un élément choisi parmi Mg et Zn,
et M$^1$ = Ni$_{(1-x-y-z)}$Co$_x$Mn$_y$M$^4{}_z$
où M$^4$ est au moins un élément choisi parmi Fe, Cu, Ti, Zr, V, Ga et Si, et

$$0 \leq x < 0,70$$

$$0,10 \leq y < 0,55$$

$$0 \leq z < 0,30$$

$$0,20 < (1\text{-}x\text{-}y\text{-}z)$$

$$b+c+z>0$$

et **en ce que** ladite matière active vérifie, pour un état de charge quelconque, la relation R suivante telle que $0,40 < R \leq 0,61$ :

$$R = (1\text{ -}a\text{-}b\text{-}c) * [\ 3 - [(n_{Li} / n_{MA} + d_{ox}) / (4\text{-}2b\text{-}3c)\ ] * (2\text{-}b\text{-}2c)\ ]$$

où $n_{Li}$ est la teneur en lithium exprimée en mole
$n_{MA}$ est la somme des teneurs en Ni, Mn, Co et M$^4$, exprimée en mole, et
$d_{ox}$ est le degré d'oxydation global de M$^1$.

2. Matière active selon la revendication 1, dans laquelle a, b, c, x, y et z vérifient la condition suivante :

$$[3 - (3x+4y+4z) * (1\text{-}a\text{-}b\text{-}c) - (a+2b+3c)] / [(1\text{-}x\text{-}y\text{-}z) * (1\text{-}a\text{-}b\text{-}c)] > 2$$

3. Matière active selon l'une des revendications précédentes, dans laquelle 0 < c.

4. Matière active selon l'une des revendications précédentes, dans laquelle M$^4$ est Ti et 0 < z < 0,20.

5. Matière active selon l'une des revendications 1 à 3, dans laquelle M$^4$ est Si et 0 < z < 0,20.

6. Matière active selon l'une des revendications précédentes, dans laquelle M$^2$ est Mg et 0 < b < 0,20.

7. Electrode positive de générateur électrochimique rechargeable au lithium comprenant un support conducteur recouvert d'une couche active contenant une matière électrochimiquement active selon l'une des revendications précédentes.

8. Electrode positive selon la revendication 7, dans laquelle ladite couche active contient en outre un liant.

9. Electrode positive selon l'une des revendications 7 et 8, dans laquelle ladite couche active contient en outre un matériau conducteur.

10. Générateur électrochimique rechargeable au lithium comprenant au moins une électrode contenant une matière active selon l'une des revendications 1 à 6.

11. Générateur électrochimique rechargeable au lithium comprenant une électrode positive selon l'une des revendications 7 à 9.

**12.** Générateur électrochimique rechargeable au lithium selon l'une des revendications 10 et 11, comprenant en outre une électrode négative dont la matière active est choisie parmi du lithium métallique et un matériau susceptible d'insérer du lithium dans sa structure.

**13.** Générateur électrochimique selon la revendication 12, comprenant une électrode négative dont la matière active est un matériau carboné susceptible d'insérer du lithium dans sa structure.

**14.** Générateur électrochimique selon la revendication 13, dans lequel ledit matériau carboné est choisi parmi le graphite, le coke, le noir de carbone et le carbone vitreux.

**Patentansprüche**

**1.** Elektrochemisch aktives Material, welches sich aus der Substitution von einem Teil des Nickels eines einphasigen Nickel- und Lithium-Mischoxids vom Typ $LiNiO_2$ ergibt, **dadurch gekennzeichnet dass** es folgender Formel entspricht:

$$Li(M^1_{(1-a-b-c)}Li_aM^2_bM^3_c)O_2$$

in der

- $0,02 < a \leq 0,25$
- $0 \leq b < 0,30$
- $0 \leq c < 0,30$
- $(a+b+c) < 0,50$
- $M^3$ mindestens ein, aus Al, B und Ga ausgewähltes Element ist,
- $M^2$ mindestens ein, aus Mg und Zn ausgewähltes Element ist,
- $M^1 = Ni_{(1-x-y-z)}Co_xMn_yM^4_z$

wobei $M^4$ mindestens ein, aus Fe, Cu, Ti, Zr, V, Ga und Si ausgewähltes Element ist, und

- $0 \leq x < 0,70$
- $0,10 \leq y < 0,55$
- $0 \leq z < 0,30$
- $0,20 < (1-x-y-z)$
- $b+c+z > 0$

**dadurch gekennzeichnet, dass** das aktive Material für einen beliebigen Ladezustand das folgende Verhältnis R wie $0,40 < R < 0,61$ erfüllt:

$$R = (1-a-b-c)*[3-[(n_{Li}/n_{MA} + d_{ox})/(4-2b-3c)]*(2-b-2c)]$$

wobei

- $n_{Li}$ der Lithiumgehalt, in mol ausgedrückt, ist
- $n_{MA}$ die Summe der Ni-, Mn-, Co- und $M^4$-Gehalte, in mol ausgedrückt, ist, und
- $d_{ox}$ der allgemeine Oxidationsgrad von $M^1$ ist.

**2.** Aktives Material nach Anspruch 1, wobei a , b, c, x, y und z die folgende Bedingung erfüllt:

$$[3 - (3x+4y+4z)*(1-a-b-c) - (a+2b+3c)]/[(1-x-y-z)*(1-a-b-c)] > 2$$

**3.** Aktives Material nach einem der vorhergehenden Ansprüche, wobei $0 < c$.

**4.** Aktives Material nach einem der vorhergehenden Ansprüche, wobei $M^4$ Ti ist, und $0 < z < 0,20$.

**EP 1 523 052 B1**

**5.** Aktives Material nach einem der Ansprüche 1 bis 3, wobei M⁴ Si ist, und 0 < z < 0,20.

**6.** Aktives Material nach einem der vorhergehenden Ansprüche, wobei M² Mg ist, und 0 < b < 0,20.

**7.** Positive Elektrode eines wiederaufladbaren elektrochemischen Lithiumgenerators, die einen leitfähigen Träger umfasst der mit einer aktiven Schicht überzogen ist, die ein elektrochemisch aktives Material nach einem der vorhergehenden Ansprüchen beinhaltet.

**8.** Positive Elektrode nach Anspruch 7, wobei die aktive Schicht ferner ein Bindemittel enthält.

**9.** Positive Elektrode nach einem der Ansprüche 7 und 8, wobei die aktive Schicht ferner ein leitendes Material enthält.

**10.** Wiederaufladbarer elektrochemischer Lithiumgenerator, der mindestens eine, ein aktives Material enthaltende, positive Elektrode nach Ansprüchen 1 bis 6 umfasst.

**11.** Wiederaufladbarer elektrochemischer Lithiumgenerator, der eine positive Elektrode nach Ansprüchen 7 bis 9 umfasst.

**12.** Wiederaufladbarer elektrochemischer Lithiumgenerator nach einem der Ansprüche 10 und 11, ferner umfassend eine negative Elektrode deren aktives Material aus dem metallischen Lithium und einem Material ausgewählt ist, das geeignet ist Lithium in seine Struktur einzufügen.

**13.** Elektrochemischer Generator nach Anspruch 12, umfassend eine negative Elektrode deren aktives Material ein kohlenstoffhaltiges Material ist, das geeignet ist Lithium in seine Struktur einzufügen.

**14.** Elektrochemischer Generator nach Anspruch 13, wobei das kohlenstoffhaltige Material aus Graphit, Koks, Ruß und Glaskohlenstoff ausgewählt ist.

**Claims**

**1.** An electrochemically active material resulting from substituting a portion of the nickel in a single-phase mixed oxide of nickel and lithium of the LiNiO$_2$ type, **characterized in that** the active material satisfies the formula:

$$Li(M^1_{(1-a-b-c)}Li_aM^2_bM^3_c)O_2$$

in which:

$$0.02 < a \le 0.25;$$

$$0 \le b < 0.30;$$

$$0 \le c < 0.30;$$

$$(a+b+c) < 0.50;$$

M³ is at least one element selected from Al, B, and Ga;
M² is at least one element selected from Mg and Zn; and
M¹ = Ni$_{(1-x-y-z)}$Co$_x$Mn$_y$M⁴$_z$

in which M⁴ is at least one element selected from Fe, Cu, Ti, Zr, V, Ga, and Si; and

$$0 \le x < 0.70$$

14

$$0.10 \le y < 0.55$$

$$0 \le z < 0.30$$

$$0.20 < (1\text{-}x\text{-}y\text{-}z)$$

$$b+c+z>0;$$

and **in that** said active material, regardless of its state of charge, satisfies the following relationship whereby $0.40 < R \le 0.61$ :

$$R = (1\text{-}a\text{-}b\text{-}c)*[3 - [(n_{Li}/n_{MA} + d_{ox})/(4\text{-}2b\text{-}3c)]*(2\text{-}b\text{-}2c)]$$

in which:

$n_{Li}$ is the lithium content expressed in moles;
$n_{MA}$ is the sum of the contents of Ni, Mn, Co, and $M^4$ expressed in moles; and
$d_{ox}$ is the overall degree of oxidation of $M^1$.

2. The active material according to claim 1, in which a, b, c, x, y, and z satisfy the following condition:

$$[3\text{-}(3x+4y+4z)*(1\text{-}a\text{-}b\text{-}c)\text{-}(a+2b+3c)]/[(1\text{-}x\text{-}y\text{-}z)*(1\text{-}a\text{-}b\text{-}c)]>2$$

3. The active material according to one of the preceding claims, in which $0 < c$.

4. The active material according to one of the preceding claims, in which $M^4$ is Ti and $0 < z < 0.20$.

5. The active material according to one of claims 1 to 3, in which $M^4$ is Si and $0 < z < 0.20$.

6. The active material according to one of the preceding claims, in which $M^2$ is Mg and $0 < b < 0.20$.

7. A positive electrode for an electrochemically rechargeable lithium cell comprising a conductive support covered with an active layer containing an electrochemically active material according to one of the preceding claims.

8. A positive electrode according to claim 7, in which said active layer further includes a binder.

9. A positive electrode according to claim 7 or claim 8, in which said active layer further includes a conductive material.

10. An electrochemically rechargeable lithium cell including at least one electrode containing an active material according to one of claims 1 to 6.

11. An electrochemically rechargeable lithium cell including a positive electrode according to one of claims 7 to 9.

12. An electrochemically rechargeable lithium cell according to one of claims 10 and 11, further including a negative electrode the active material of which is selected from metallic lithium and a material capable of inserting lithium in its structure.

13. Electrochemical cell according to claim 12, including a negative electrode whose active material is a carbon-containing material capable of inserting lithium in its structure.

14. An electrochemical cell according to claim 13, in which said carbon-containing material is selected from graphite, coke, carbon black, and vitreous carbon.

# Fig. 1

# Fig. 2

## Fig. 3

## Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0782206 A
- EP 0918041 A
- US 6040090 A
- EP 1189296 A
- WO 02073718 A
- US 2003022063 A